# EUROPÄISCHE PATENTSCHRIFT

(11) **EP 0 923 471 B1**
(45) Veröffentlichungstag und Bekanntmachung des Hinweises auf die Patenterteilung: **10.04.2002**
(21) Anmeldenummer: 98941250.7
(22) Anmeldetag: 30.06.1998
(51) Int. Cl.: B60S 1/38, B60S 1/40

(54) **WISCHBLATT ZUM REINIGEN VON FAHRZEUGSCHEIBEN**
WIPER BLADE FOR CLEANING VEHICLE GLASS PANES
RACLETTE D'ESSUIE-GLACE POUR LE NETTOYAGE DE VITRES DE VEHICULES

(30) Priorität: 11.07.1997 DE 19729864
(43) Veröffentlichungstag der Anmeldung: 23.06.1999
(73) Patentinhaber: ROBERT BOSCH GMBH, 70442 Stuttgart (DE)
(72) Erfinder: KOTLARSKI, Thomas, D-77830 Bühlertal (DE); LORENZ, Karlheinz, D-76534 Baden-Baden (DE)
(86) Internationale Anmeldenummer: DE9801787
(87) Internationale Veröffentlichungsnummer: WO9902383

(56) Entgegenhaltungen:
- EP-A- 0 316 114
- DE-B- 1 028 896
- FR-A- 2 222 853
- FR-A- 2 222 855

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpreßdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397).

Die Erfindung geht aus von einem Wischblatt nach dem Oberbegriff des Anspruchs 1. Bei einem bekannten Wischblatt dieser Art (DE-B-10 28 896) sind die beiden als Längsfedern bezeichneten, zum Tragelement gehörenden Federschienen durch einstückige Federklammern in den als Schlitze bezeichneten Längsnuten der Wischgummileiste gesichert. Die Klammern müssen in Längsrichtung des Wischblatts auf die Längsfedern aufgeschoben werden, wobei sie deren Außenkanten mit Krallen umgreifen. Ein die Krallen verbindender Steg muß entsprechend der Dicke des Rückens der Wischleiste gekrümmt sein, was zu ungünstigen Montagebedingungen führt. Eine im Bereich der Anschlußvorrichtung angeordnete Mittelklammer muß diese sogar in einem Durchbruch queren, was einen erheblichen Montageaufwand bedeutet, weil zumindest eine der beiden Krallen erst danach geformt werden kann.

### Vorteile der Erfindung

Bei dem erfindungsgemäßen Wischblatt mit den kennzeichnenden Merkmalen des Anspruchs 1 ist es möglich die fertigen Halterteile quer zur Längserstreckung des Tragelements und damit auch des Wischblatts an dieses heranzuführen und dann miteinander zu verbinden. Eine derartige Montage ist besonders kostengünstig, weil sie gegebenenfalls durch Montageautomaten übernommen werden kann.

Zur Verbesserung des Wischverhaltens und der Wischqualität sind zweckmäßig mehrere Halter über die Längserstreckung des Tragelements verteilt und mit Abstand voneinander angeordnet.

Bei relativ kurzen Wischblättern kann dazu die Anordnung eines Halters an jedem Endabschnitt des langgestreckten Tragelements genügen.

Wenn die Anschlußvorrichtung mit an den beiden Federschienen angreifenden Befestigungsmitteln versehen und die Anschlußvorrichtung in Längsrichtung des Tragelements geteilt ist, wobei die Vorrichtungsteile in ihrer endgültigen Montageposition miteinander verbunden sind, ergibt sich auch für die Anschlußvorrichtung eine rationelle Montage am Tragelement.

Besonders vorteilhaft ist die Ausgestaltung eines auch bei großen Fahrgeschwindigkeiten hochwirksamen Wischblatts, wenn der sich auf der von der Scheibe abgewandten Bandfläche befindliche Bereich der Wischleiste als eine sich im wesentlichen von der Scheibe wegerstreckende Windabweisleiste ausgebildet und jedem Halter eine Ausnehmung in der Windabweisleiste zugeordnet ist.

Dabei kann es hinsichtlich der Wischblatt-Bauhöhe günstig sein, wenn der Anschlußvorrichtung eine Ausnehmung in der Windabweisleiste zugeordnet ist.

Bei einfacher Montage wird eine zuverlässige Sicherung der Federschienen in den Längsnuten der Wischleiste erreicht, wenn die Halterteile eine freiliegenden Abschnitt der Federschienen-Außenkanten klammerartig umgreifen.

Diese Ausbildung ist auch bei gleichen Vorteilen bei der Anordnung der Anschlußvorrichtung vorteilhaft. Darüber hinaus kann die montierte Anschlußvorrichtung mit dazu beitragen, daß die Federschienen in ihrem Mittelabschnitt vorschriftsmäßig in den Längsnuten sitzen.

Eine besonders einfache stabile und leicht zu montierende Anschlußvorrichtung ergibt sich, wenn die Anschlußvorrichtung zwei Vorrichtungsteile hat und jedes Vorrichtungsteil einen sich in Längsrichtung des Tragelements erstreckenden, zur Scheibe stehend angeordneten und von dieser weg erstrekkenden flanschartigen Ansatz hat, an welchem Anschlußmittel für den Wischerarm sitzen.

Weitere Montagevereinfachungen sowohl bei den Hältern als auch bei der Anschlußvorrichtung ergeben sich, wenn die Halterteile und/oder auch die Vorrichtungsteile miteinander verrastbar sind.

Weitere, vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

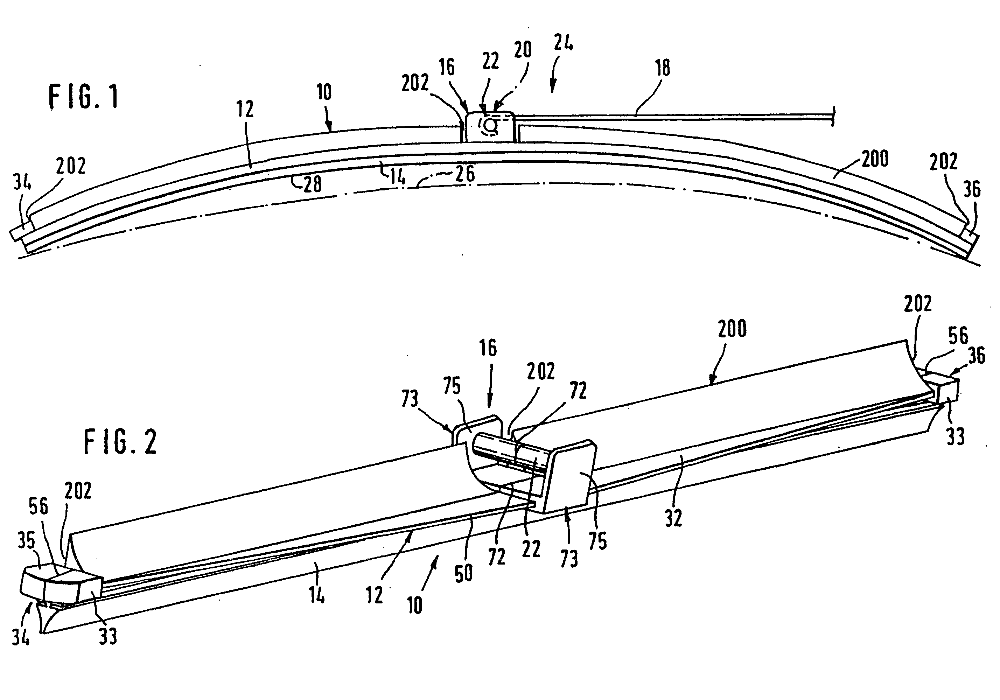

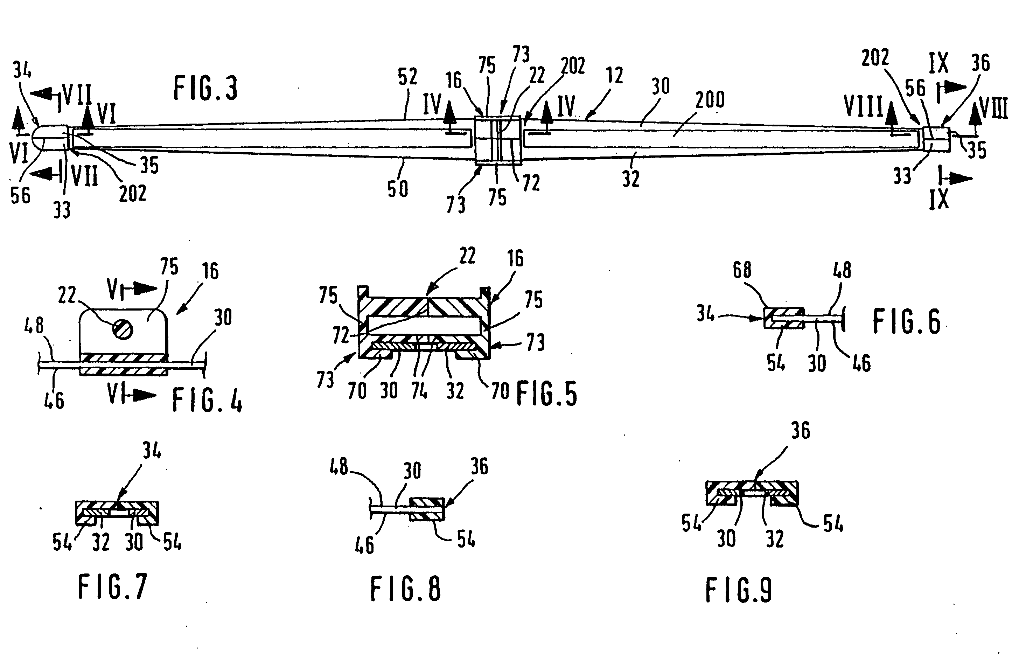

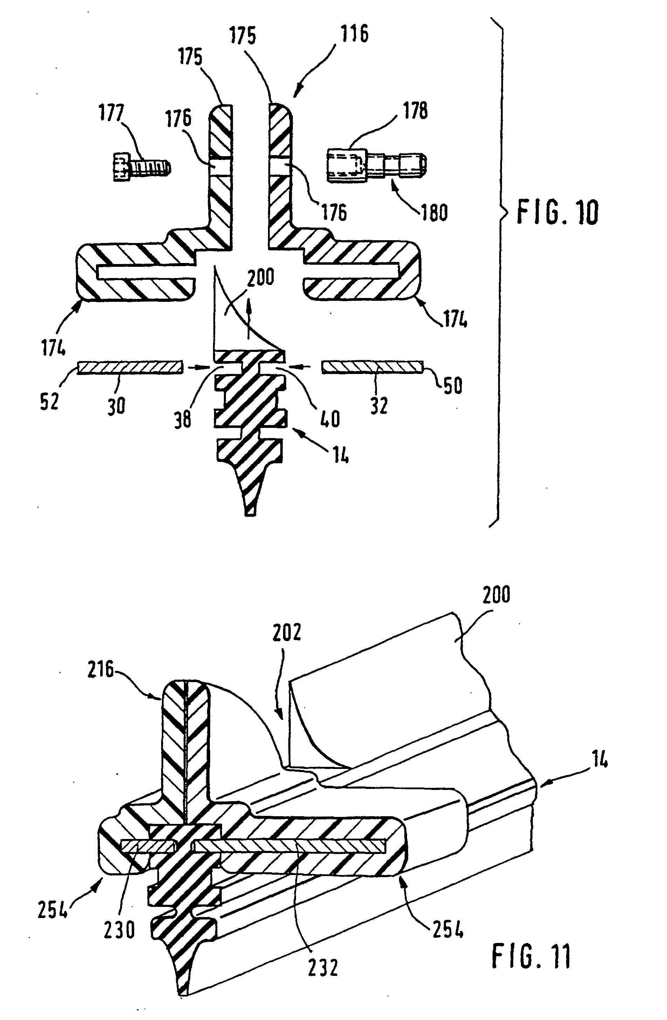

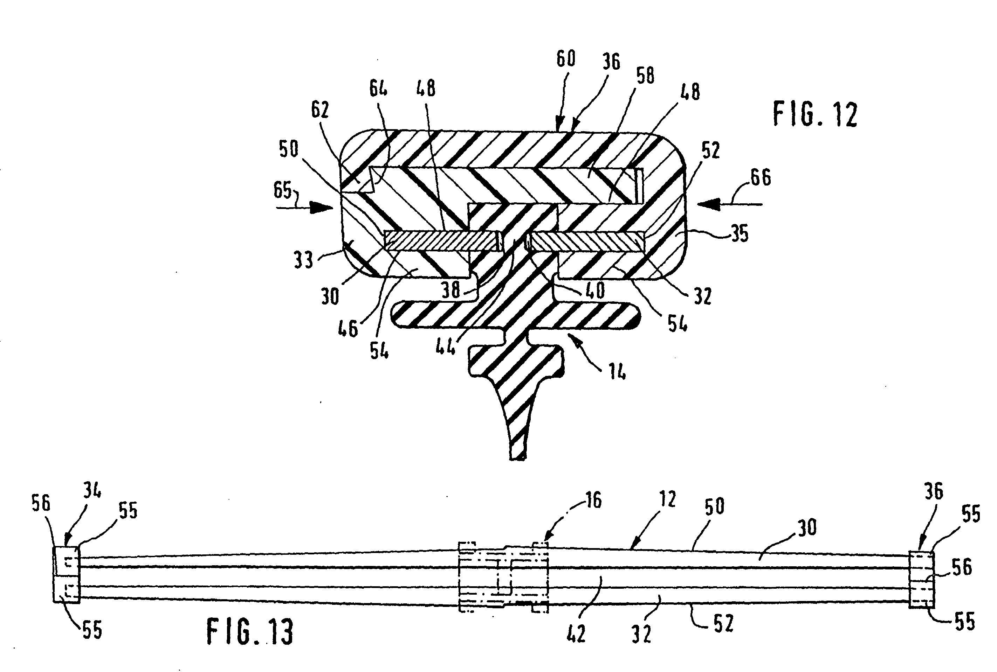

In der Zeichnung zeigen: Figur 1 eine Seitenansicht eines erfindungsgemäßen Wischblatts, Figur 2 eine perspektivische, unmaßstäbliche Ansicht des Wischblatts gemäß Figur 1, Figur 3 eine Draufsicht auf das Wischblatt gemäß Figur 1, Figur 4 einen Teilschnitt entlang der Linie IV-IV durch das mit einer Anschlußvorrichtung versehene Tragelement des Wischblatts gemäß Figur 3, Figur 5 einen Schnitt entlang der Linie V-V durch die Anordnung gemäß Figur 4, Figur 6 einen Teilschnitt entlang der Linie VI-VI durch das Tragelement des Wischblatts gemäß Figur 3, Figur 7 einen Schnitt entlang der Linie VIT-VII durch das Tragelement gemäß Figur 3 um 90° gedreht, Figur 8 einen Teilschnitt entlang der Linie VIII-VIII durch das Tragelement des Wischblatts gemäß Figur 3, Figur 9 einen Schnitt entlang der Linie IX-IX durch das Tragelement gemäß Figur 3 um 90° gedreht, Figur 10 einen Schnitt Figur 5 durch ein mit einer anderen Anschlußvorrichtung ausgestattetes Wischblatt, wobei die Teile des Wischblatts und der Anschlußvorrichtung in einer Vormontageposition dargestellt sind, Figur 11 eine Anordnung gemäß Figur 10 bei einem anders ausgebildeten Wischblatt, wobei sich die Wischblatt- und Anschlußvorrichtungsteile in ihrer Betriebsposition befinden, Figur 12 einen Schnitt gemäß Figur 9 durch ein Wischblatt im Bereich eines Halters für die Federschienen, dessen beide Teile miteinander verrastet sind, in vergrößerter Darstellung und Figur 13 eine Draufsicht auf ein Tragelement des Wischblatts gemäß Figur 2.

### Beschreibung des Ausführungsbeispiels

Ein in den Figuren 1 bis 3 dargestelltes Wischblatt 10 weist ein mehrteiliges, langgestrecktes, federelastisches Tragelement 12 auf, das in Figur 13 separat dargestellt ist. An der von der zu wischenden Scheibe abgewandten Oberseite des Tragelements ist eine Anschlußvorrichtung 16 angeordnet, mit deren Hilfe das Wischblatt 10 mit einem an der Karosserie eines Kraftfahrzeugs geführten, angetriebenen Wischerarm 18 lösbar verbunden werden kann. An der der Scheibe zu gewandten Unterweite des Tragelements 12 ist eine langgestreckte, gummielastische Wischleiste 14 längsachsenparallel angeordnet. An dem freien Ende 20 des Wischerarms 18 ist ein als Gegenanschlußmittel dienender Haken angeformt, welcher einen zur Anschlußvorrichtung 16 des Wischblatts 10 gehörenden Gelenkbolzen 22 umgreift. Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 und damit auch der Haken am Armende 20 ist in Richtung des Pfeiles 24 zur zu wischenden Scheibe belastet, deren zu wischende Oberfläche in Figur 1 durch eine strichpunktierte Linie 26 angedeutet ist. Da die strichpunktierte Linie 26 die stärkste Krümmung der Scheibenoberfläche darstellen soll ist klar ersichtlich, daß die Krümmung des mit seinen beiden Enden an der Scheibe anliegenden Wischblatts 10 stärker ist als die maximale Scheibenkrümmung. Unter dem Anpreßdruck (Pfeil 24) legt sich das Wischblatt mit seiner Wischlippe 28 über seine gesamte Länge an der Scheibenoberfläche 26 an. Dabei baut sich im bandartigen federelastischen Tragelement 12 eine Spannung auf, welche für eine ordnungsgemäße Anlage der Wischleiste 14 bzw. der Wischlippe 28 über deren gesamte Länge an der Kraftfahrzeugscheibe sorgt.

Im folgenden soll nun auf die besondere Ausgestaltung des erfindungsgemäßen Wischblatts näher eingegangen werden. In Figur 13 ist das Tragelement 12 separat dargestellt. Dort ist klar ersichtlich, daß das Tragelement 12 zwei Federschienen 30 und 32 aufweist, die mit Abstand voneinander angeordnet sind. Neben den beiden Federschienen 30 und 32 gehören zum Tragelement 12 bei der Ausführungsform gemäß den Figuren 1 bis 3 und 13 Halter 34 und 36, deren Zweck später erläutert wird. Weiter ist in Figur 13 angedeutet, daß im Mittelbereich des Tragelements 12 die Anschlußvorrichtung 16 sitzt, welche dort strichpunktiert dargestellt ist. Die Anordnung und die Befestigung der Anschlußvorrichtung 16 am Tragelement 12 bzw. an dessen Federschienen 30 und 32 ist am besten aus den Figuren 4 und 5 zu entnehmen. Insbesondere Figur 12 zeigt die Anordnung der Tragelementteile (Federschienen 30 und 32) in bezug auf die Wischleiste 14. In Verbindung mit den Figuren 2 und 3 ist erkennbar, daß die Federschienen 30 und 32 in zwei einander gegenüberliegende Längsnuten 38 und 40 der Wischleiste 14 liegen, die sich in einer gemeinsamen Ebene befinden und zwischen denen ein Längsschlitz 42 im Tragelement 12 (Figur 13) verbleibt. Durch diesen Längsschlitz 42 erstreckt sich eine stegartige Einschnürung 44 der Wischleiste 14. Aus den Figuren 12 und 13 ist weiter zu entnehmen, daß das Tragelement 12 zwei Bandflächen aufweist, von denen die eine Bandfläche 46 der zu wischenden Scheibe zugekehrt ist, während die andere Bandfläche 48 von der Scheibe abgewandt ist. Weiter ist erkennbar, daß die beiden Federschienen 30 und 32 zumindest abschnittsweise mit ihren voneinander abgewandten Längskanten 50 und 52 aus den Längsnuten 38, 40 der Wischleiste 14 herausragen. Zur Sicherung der beiden Federschienen 30 und 32 in ihren Längsnuten 38 und 40 dienen beim Ausführungsbeispiel zwei Halter, von denen sich jeweils einer am Endabschnitt der Federschienen 30 und 32 befindet. Die beiden Halter 38, 40 sind somit mit Abstand voneinander angeordnet. Die Halter selbst erstrecken sich quer zur Längserstreckung des Wischblatts 10 und umgreifen die voneinander abliegenden, äußeren Längskanten 50 und 52 der beiden Federschienen 30 und 32 mit krallenartigen Ansätzen 54. Weiter ist ersichtlich, daß die Halter 34 und 36 in Längsrichtung des Wischblatts 10 geteilt sind, was in den Figuren 2, 3 und 13 durch eine Längsfuge 56 angedeutet ist. In der Praxis wird diese Längsfuge 56 jedoch nicht unbedingt so ausgebildet sein wie dies in den Figuren 2, 3 und 13 zu sehen ist. Damit die Halter ihre Sicherungsfunktion gegenüber den Federschienen 30 und 32 gerecht werden, müssen die durch Trennfuge 56 gebildeten Halterteile 33 und 35 nach der Montage fest miteinander verbunden werden. Dies kann beispielsweise durch Schweißen, Kleben oder durch eine ähnliche Fertigungs- oder Montagetechnik erreicht werden, gleichgültig ob die Halter aus einem Kunststoff oder auch aus Metall hergestellt sind.

Eine von mehreren praxisgerechten Lösungen zur Verbindung der beiden Halterteile 33 und 35 miteinander soll anhand von Figur 12 erläutert werden. Dort ist zu sehen, daß die Halterteile 33 und 35 des Halters 36 mit krallenartigen Ansätzen 54 auf ihren Federschienen 30 bzw. 32 sitzen. Ihre Platzierung ist so getroffen, daß die Ansätze 54 die Federschienen-Außenkanten 50, 52 in einem freiliegenden Abschnitt der Federschienen 30, 32 umgreifen. Das Halterteil 33 übergreift mit einem quer zur Längserstreckung des Wischblatts ausgerichteten Ansatz 58 die Wischleiste 14. Ein U-förmiger Fortsatz 60 des Halterteils 35 übergreift seinerseits den Ansatz 58 des Halterteils 33. Der sich auf der Seite des Halterteils 33 befindliche freie Endabschnitt des U-Fortsatzes 60 untergreift mit seinem entsprechend ausgebildeten U-Schenkel 62 eine Hinterschneidung 64 des Halterteils 33, so daß eine ungewollte Trennung der Halterteile 33 und 35 voneinander nicht möglich ist. Zur Montage der beiden Halterteile, d.h. um diese in die bezeichnete Betriebsposition zu bringen, müssen sie gegeneinander in Richtung der beiden Pfeile 65 und 66 gedrückt werden, was unter Ausnutzung der Elastizität der Wischleiste 14 möglich ist. Nach erfolgter Verrastung gemäß Figur 12 sitzen die beiden Halterteile 33 und 35 unter einer Rest-Spannung der Wischleiste 14 an ihrer vorschriftsmäßigen, in Figur 12 dargestellten Position. Die Halter können beispielsweise gemäß Figur 6 ausgebildet sein, wo sie mit einer kappenartigen Endwand 68 die Endkanten der Federschienen 30 und 32 abdecken. Dadurch wird eine Verminderung der Verletzungsgefahr durch die scharfen Endkanten der Federschienen 30, 32 erreicht. Weiter kann durch diese kappenartigen Endhalter 34 auch die Gefahr der Beschädigung der Fahrzeuglackierung bzw. des Wischblatts selbst verringert werden. Es ist jedoch auch möglich die Halter gemäß der Darstellung in Figur 8 auszubilden, wo diese Endwand fehlt und der Halter 36 mit den Endkanten der Federschienen 30, 32 abschließt. Eine den Haltern 34 und 36 ähnliche Ausgestaltung weist die Anschlußvorrichtung 16 auf. Wie die Figuren 2, 3 und 5 zeigen, ist die Anschlußvorrichtung ebenfalls in Längsrichtung des Wischblatts geteilt. Dies wird durch eine Nahtlinie 72 dargestellt. Diese Nahtlinie 72 führt sowohl durch ein am Tragelement 12 anliegendes Plattenteil 74 (Figur 5), welches mit Krallen 70 die Federschienen 30 und 32 umgreift, als auch durch den Gelenkbolzen 22. Die Krallen 70 bilden somit Befestigungsmittel zum Halten der Anschlußvorrichtung 16 am Tragelement 12. Bei einer in den Figuren 2 bis 5 dargestellten Ausführungsform der Anschlußvorrichtung weist diese am Plattenteil 74 angeordnete, mit Abstand voneinander befindliche, flanschartige Wände 75 auf, an welchen jeweils eine Hälfte des ebenfalls geteilten Gelenkbolzens 22 angeordnet ist. Die flanschartigen Wände 75 gehören zu zwei an der Nahtlinie 72 zusammenfügbaren Vorrichtungs- oder Basisteilen 73, von denen jedes einen sich in Längsrichtung des Tragelements erstreckenden, zur Scheibe stehend angeordneten und sich von dieser wegerstreckenden flanschartigen Ansatz (Wand 75) hat, an welchem die durch den Gelenkbolzen 72 gebildeten Anschlußmittel für den Wischerarm 18 sitzen. Die beiden Teile 73 der Anschlußvorrichtung 16 umgreifen mit ihren Krallen 70 einen freiliegenden Mittelabschnitt der Federschienen-Außenkanten klammerartig. Genauso wie dies schon für die Halter 34 und 36 erläutert worden ist, sind die beiden Vorrichtungsteile 73 der Anschlußvorrichtung 16 durch nicht näher dargestellte Mittel miteinander verbindbar. Eine Verrastung der beiden Vorrichtungsteile miteinander ist ebenso denkbar wie beispielsweise ein Verschweißen oder Verkleben.

Eine andere Ausgestaltung einer Anschlußvorrichtung 116 ist aus Figur 10 ersichtlich. Dort sind an den beiden Basisteilen 174 ebenfalls sich in Längsrichtung des Tragelements erstreckende, zur Scheibe stehend angeordnete und sich von dieser wegerstreckende flanschartige Ansätze 175 vorhanden, die jedoch direkt aneinander anliegend miteinander verbunden werden können. Im übrigen umgreifen auch bei dieser Ausführungsform die Basisteile 174 die Außen-Längskanten der Federschienen 30 und 32 mit krallenartigen Ansätzen 154, so wie dies schon beim vorhergehenden Ausführungsbeispiel der Anschlußvorrichtung 16 beschrieben worden ist. Die Befestigung dieser beiden Basisteile 174 kann durch eine Schraubverbindung realisiert werden. Dazu weisen die beiden Ansätze 175 je eine Bohrung 176 auf, welche im Einbauzustand der Anschlußvorrichtung 116 miteinander fluchten. Eine Schraube 177 durchdringt die Ansätze 175 in den Bohrungen 176 und wirkt mit einem Mutternteil 178 eines Gelenkbolzens 180 zusammen, an dem in an sich bekannter Weise das entsprechend ausgebildete freie Ende eines Wischerarms angeschlossen werden kann. Es ist jedoch auch denkbar - in an sich bekannter Weise - den Gelenkbolzen mit dem Wischerarm fest zu verbinden und die zu diesem gehörenden Bolzenaufnahme an den Ansätzen 175 zu befestigen. Dabei kann gleichzeitig eine feste Verbindung der beiden Basisteile 174 realisiert werden.

Eine weitere, der Ausführungsform gemäß Figur 10 stark angenäherte Ausführungsform ist in Figur 11 dargestellt. Der wesentliche Unterschied zu der Ausführungsform gemäß Figur 10 besteht darin, daß die beiden Federschienen 230 und 232 eine ungleiche Breite aufweisen. Eine entsprechende Ausbildung weisen deshalb auch die krallenartigen Ansätze 254 dieser weiteren Anschlußvorrichtung 216 auf.

Eine Besonderheit des erfindungsgemäßen Wischblatts soll nun noch anhand der Figuren 1 bis 3 und 11 erläutert werden. Wie diesen Figuren zu entnehmen ist, hat die Wischleiste 14 auf der von der Scheibe abgewandten Bandfläche 48 des Tragelements 12 einen Fortsatz, der als eine sich im wesentlichen von der Scheibe weg erstreckende Windabweisleiste 200 ausgebildet ist. Damit bei einem derart ausgebildeten Wischblatt die Halter 34, 36 und auch die Anschlußvorrichtung 16 sinnvoll plaziert werden können, sind diesen Ausnehmungen in der Windabweisleiste 200 zugeordnet.

Allen Ausführungsbeispielen der Halter 34, 36 ist gemeinsam, daß bei einem gattungsgemäßen Wischblatt die Halter in Längsrichtung des Wischblatts geteilt sind und daß die Halterteile 33, 35 miteinander verbunden sind.

Eine entsprechende Ausbildung ist auch für die verschiedenen, erläuterten Anschlußvorrichtungen 16 bzw. 116 bzw. 216 vorgesehen.

## Patentansprüche

1. Wischblatt (10) zum Reinigen von Fahrzeugscheiben mit einem bandartig langgestreckten, federelastischen Tragelement (12), an dessen einer von der Scheibe abgewandten Bandfläche (48) eine mit einer angetriebenen Wischerarm (18) verbindbare Anschlußvorrichtung (16) gehalten und an dessen anderer, der Scheibe zugewandten Bandfläche (46) eine langgestreckte, gummielastische Wischleiste (14) längsachsenparallel angeordnet ist, wobei das mehrteilige Tragelement (12) zwei in einander gegenüberliegenden Längsnuten (38, 40) der Wischleiste (14) angeordnete Federschienen (30, 32) aufweist,
welche durch wenigstens einen deren voneinander abgewandten Längskanten übergreifenden Halter in den Längsnuten gesichert sind, **dadurch gekennzeichnet, daß** der Halter (34 bzw. 36) in Längsrichtung des Wischblatts (10) in Halterteile (33, 35) geteilt ist und daß die Halterteile (33, 35) miteinander verbunden sind.

2. Wischblatt nach Anspruch 1, **dadurch gekennzeichnet, daß** mehrere Halter (34, 36) über die Längserstreckung des Tragelements (12) verteilt und mit Abstand voneinander angeordnet sind.

3. Wischblatt nach Anspruch 2, **dadurch gekennzeichnet, daß** wenigstens an jedem Endabschnitt des langgestreckten Tragelements (12) ein Halter (34 bzw. 36) angeordnet ist.

4. Wischblatt nach einem der Ansprüche 1 bis 3, **dadurch gekennzeichnet, daß** die Anschlußvorrichtung (16) mit an den beiden Federschienen (30, 32) angreifenden Befestigungsmitteln versehen ist, daß die Anschlußvorrichtung in Längsrichtung des Tragelements (12) geteilt ist und daß die Vorrichtungsteile (73) miteinander verbunden sind.

5. Wischblatt nach einem der Ansprüche 1 bis 4, **dadurch gekennzeichnet, daß** der sich auf der von der Scheibe abgewandten Bandfläche (48) befindliche Bereich der Wischleiste (14) als eine sich im wesentlichen von der Scheibe weg erstrekkende Windabweisleiste (200) ausgebildet ist und daß jedem Halter eine Ausnehmung in der Windabweisleiste zugeordnet ist.

6. Wischblatt nach Anspruch 5, **dadurch gekennzeichnet, daß** der Anschlußvorrichtung (16) eine Ausnehmung (202) in der Windabweisleiste (200) zugeordnet ist.

7. Wischblatt nach einem der Ansprüche 1 bis 5, **dadurch gekennzeichnet, daß** die Halterteile einen freiliegenden Abschnitt der Federschienen-Außenkanten (50, 52) klammerartig umgreifen.

8. Wischblatt nach einem der Ansprüche 1 bis 7, **dadurch gekennzeichnet, daß** die Teile der Anschlußvorrichtung (16) einen freiliegenden Mittelabschnitt der Federschienen-Außenkanten (50, 52) klammerartig umgreifen.

9. Wischblatt nach einem der Ansprüche 4 bis 8, **dadurch gekennzeichnet, daß** die Anschlußvorrichtung (16 bzw. 116 bzw. 216) zwei Vorrichtungsteile hat, daß jedes Teil ein sich in Längsrichtung des Tragelements erstreckenden, zur Scheibe stehend angeordneten und sich von dieser weg erstreckenden flanschartigen Ansatz (75 bzw. 175) hat, an welchem Anschlußmittel (22 bzw. 180) für den Wischerarm (18) sitzen.

10. Wischblatt nach einem der Ansprüche 1 bis 9, **dadurch gekennzeichnet, daß** die Halterteile (33, 35) miteinander verrastbar sind.

11. Wischblatt nach einem der Ansprüche 4 bis 10, **dadurch gekennzeichnet, daß** die Vorrichtungsteile (174 bzw. 175) miteinander verrastbar sind.

## Claims

1. Wiper blade (10) for cleaning vehicle windows/lenses, having a spring-elastic supporting element (12) which is elongated in a strip-like manner, on whose one strip surface (48) which faces away from the window/lens a connecting device (16) which can be connected to a driven wiper arm (18) is held, and on whose other strip surface (46) which faces the window/lens an elongated, rubber-elastic wiper strip (14) is arranged parallel to the longitudinal axis, the multi-part supporting element (12) having two spring rails (30, 32) which are arranged in mutually opposite longitudinal grooves (38, 40) of the wiper strip (14) and are secured in the longitudinal grooves by at least one holder which fits over their mutually remote longitudinal edges, **characterized in that** the holder (34 or 36) is divided in the longitudinal direction of the wiper blade (10) into holder parts (33, 35), and **in that** the holder parts (33, 35) are connected to each other.

2. Wiper blade according to Claim 1, **characterized in that** a plurality of holders (34, 36) are distributed over the longitudinal extent of the supporting element (12) and are arranged at a distance from one another.

3. Wiper blade according to Claim 2, **characterized in that** a holder (34 or 36) is arranged at least on each end section of the elongated supporting element (12).

4. Wiper blade according to one of Claims 1 to 3, **characterized in that** the connecting device (16) is provided with fastening means which engage on the two spring rails (30, 32), **in that** the connecting device is divided in the longitudinal direction of the supporting element (12), and **in that** the device parts (73) are connected to one another.

5. Wiper blade according to one of Claims 1 to 4, **characterized in that** that region of the wiper strip (14) which is situated on the strip surface (48) facing away from the window/lens is designed as a wind-deflecting strip (200) which essentially extends away from the window/lens, and **in that** each holder is assigned a recess in the wind-deflecting strip.

6. Wiper blade according to Claim 5, **characterized in that** the connecting device (16) is assigned a recess (202) in the wind-deflecting strip (200).

7. Wiper blade according to one of Claims 1 to 5, **characterized in that** the holder parts grip in a clip-like manner around an exposed section of the spring-rail outer edges (50, 52).

8. Wiper blade according to one of Claims 1 to 7, **characterized in that** the parts of the connecting device (16) grip in a clip-like manner around an exposed central section of the spring-rail outer edges (50, 52).

9. Wiper blade according to one of Claims 4 to 8, **characterized in that** the connecting device (16 or 116 or 216) has two device parts, and **in that** each part has a flange-like projection (75 or 175) which extends in the longitudinal direction of the supporting element, is arranged perpendicular with respect to the window/lens and extends away from the latter and on which connecting means (22 or 180) for the wiper arm (18) sit.

10. Wiper blade according to one of Claims 1 to 9, **characterized in that** the holder parts (33, 35) can be latched to one another.

11. Wiper blade according to one of Claims 4 to 10, **characterized in that** the device parts (174 and 175) can be latched to one another.

## Revendications

1. Balai d'essuie-glace (10) pour nettoyer des vitres de véhicules comprenant un élément porteur (12) élastique à ressort, allongé, en forme de bande, dont une surface (48) non tournée vers la vitre comporte un dispositif de liaison (16) destiné à être relié au bras d'essuie-glace (18), entraîné, et dont l'autre face (46) tournée vers la vitre, reçoit une barrette d'essuyage (14) allongée, parallèle à l'axe longitudinal, cette barrette étant en caoutchouc élastique, et
l'élément porteur (12) en plusieurs parties comprend des éléments à ressort (30, 32) installés dans les rainures longitudinales opposées (38, 40) de la raclette (14), ces éléments à ressort étant fixés par au moins l'un des supports entourant les arêtes longitudinales opposées l'une à l'autre dans les rainures longitudinales,
**caractérisé en ce que**
les supports (34, 36) sont divisés en parties de support (33, 35) dans la direction longitudinale du balai d'essuie-glace (10) et les parties de support (33, 35) sont reliées l'une à l'autre.

2. Balai d'essuie-glace selon la revendication 1,
**caractérisé en ce que**
plusieurs supports (34, 36) sont répartis suivant la longueur de l'élément porteur (12) et sont installés de façon écartée les uns par rapport aux autres.

3. Balai d'essuie-glace selon la revendication 2,
**caractérisé en ce qu'**
un support (34, 36) est prévu à chaque segment d'extrémité de l'élément porteur allongé (12).

4. Balai d'essuie-glace selon l'une quelconque des revendications 1 à 3,
**caractérisé en ce que**
le dispositif de liaison (16) est muni de moyens de fixation coopérant avec les deux éléments à ressort (30, 32),
le dispositif de liaison est divisé dans la direction longitudinale de l'élément porteur (12) et les parties de dispositif (73) sont reliées l'une à l'autre.

5. Balai d'essuie-glace selon l'une quelconque des revendications 1 à 4,
**caractérisé en ce que**
la zone de la raclette (14) qui se trouve sur la surface (48) à l'opposé de la vitre, est réalisée sous la forme d'une barrette déflectrice (200) qui va en s'écartant principalement de la vitre et pour chaque support, la barrette déflectrice comporte une cavité.

6. Balai d'essuie-glace selon la revendication 5,
**caractérisé en ce que**
le dispositif de liaison (16) comporte une cavité (202) dans la barrette déflectrice (200).

7. Balai d'essuie-glace selon l'une quelconque des revendications 1 à 5,
**caractérisé en ce que**
les parties de support viennent entourer à la manière de pinces, un segment dégagé des arêtes extérieures (50, 52) des éléments à ressort.

8. Balai d'essuie-glace selon l'une quelconque des revendications 1 à 7,
**caractérisé en ce que**
les parties du dispositif de liaison (16) entourent à la manière de pinces un segment médian dégagé des arêtes extérieures (50, 52) des éléments à ressort.

9. Balai d'essuie-glace selon l'une quelconque des revendications 4 à 8,
**caractérisé en ce que**
le dispositif de liaison (16, 116, 216) comporte deux parties et chaque partie comporte un prolongement en forme de bride (75, 175) s'étendant dans la direction longitudinale de l'élément porteur, perpendiculairement à la vitre et dans la direction opposée à celle-ci, pour recevoir l'élément de liaison (22, 180) du bras d'essuie-glace (18).

10. Balai d'essuie-glace selon l'une quelconque des revendications 1 à 9,
**caractérisé en ce que**
les parties de support (33, 35) sont accrochées l'une à l'autre.

11. Balai d'essuie-glace selon l'une quelconque des revendications 4 à 10,
**caractérisé en ce que**
les parties du dispositif (174, 175) sont accrochées l'une à l'autre.
